## Europäisches Patentamt
## European Patent Office
## Office européen des brevets

(19)

(11) Veröffentlichungsnummer: **0 199 187**
**B1**

(12) # EUROPÄISCHE PATENTSCHRIFT

(45) Veröffentlichungstag der Patentschrift:
**08.06.88**

(51) Int. Cl.⁴: **B 60 H 1/32**

(21) Anmeldenummer: **86104854.4**

(22) Anmeldetag: **09.04.86**

(54) Klimaanlage für Kraftfahrzeuge, insbesondere für Personenkraftwagen.

(30) Priorität: **24.04.85  DE 3514781**

(43) Veröffentlichungstag der Anmeldung:
**29.10.86 Patentblatt 86/44**

(45) Bekanntmachung des Hinweises auf die Patenterteilung:
**08.06.88 Patentblatt 88/23**

(84) Benannte Vertragsstaaten:
**DE FR GB IT SE**

(56) Entgegenhaltungen:
**EP-A-0 001 901**
**DE-A-3 219 950**
**DE-B-1 251 493**
**FR-A-1 554 833**
**US-A-3 812 687**

(73) Patentinhaber: **BAYERISCHE MOTOREN WERKE Aktiengesellschaft, Postfach 40 02 40 Petuelring 130 - AJ- 36, D-8000 München 40 (DE)**

(72) Erfinder: **Bednarek, Henryk, Max- Frieseneggerstrasse 3, D-8910 Landsberg (DE)**

(74) Vertreter: **Schweiger, Erwin, c/o Bayerische Motoren Werke AG - AJ- 35 Postfach 40 02 40 Petuelring 130, D-8000 München 40 (DE)**

EP 0 199 187 B1

## Beschreibung

Die Erfindung bezieht sich auf eine Klimaanlage der Bauart gemäß dem Oberbegriff des Patentanspruches 1.

Bei der gemäß DE-A-3047 955 bekannten Klimaanlage dieser Bauart mündet die Umgehungsleitung nach dem Kühl-Kondensator bzw. Heiz-Verdampfer in die- beim Heizen zur Saugseite des Kompressors führende Kältemittel-Leitung. Der Kühl-Kondensator bzw. Heiz-Verdampfer ist daher beim Heizen nicht durchströmt und wirkt somit nur unmittelbar nach dem Beginn des Heizens kurzzeitig bis zum Erreichen eines Beharrungszustandes als Heiz-Verdampfer.

Aufgabe der Erfindung ist es, die bekannte Klimaanlage so weiterzubilden, daß der Kühl-Kondensator beim Heizen ständig als Heiz-Verdampfer genutzt werden kann, um zusätzlich zur Kompressionswärme des Kompressors eine weiter erhöhte Heizleistung durch Wärmepumpenfunktion zu ermöglichen, und zwar zumindest während der Anwärmzeit des Motor-Kühlkreises bis zu einer zum Heizen ausreichenden Motor-Betriebstemperatur und bis zu einer bei dem 0-Punkt naher Umgebungstemperatur sich unter bestimmten Umständen einstellenden Vereisung des Heiz-Verdampfers.

Zur Lösung dieser Aufgabe sieht die Erfindung die kennzeichnenden Merkmale des Patentanspruches 1 vor. Dadurch wird der Heiz-Verdampfer und dessen Anschluß an die Umgehungsleitung an die bei niedrigen Temperaturen des Kältemittels besonders niedrige Verdampfungstemperatur und das damit sehr große spezifische Volumen des Kältemittels angepaßt, so daß dessen Verdampfung und Strömung begünstigt und die Heizleistung insgesamt erheblich erhöht wird, ohne daß in Gegenstromrichtung des Kältemittels beim Kohlen die Funktion des Kühl-Kondensators beeinträchtigt wird. Das Kältemittel ist dabei beim Einströmen in den Kühl-Kondensator ebenfalls dampfförmig und weist somit in dessen erstem Teilbereich auch ein relativ großes spezifisches Volumen auf. Der in Strömungsrichtung beim Kühlen restliche einflutige Teilbereich des Kühl-Kondensators gewährleistet die volle Kühlleistung der Klimaanlage.

Der Anteil des mehrflutigen Teilbereiches gemäß Anspruch 2 ergibt eine besonders vorteilhafte Aufteilung des Kühl-Kondensators bzw. Heiz-Verdampfers. Die temperaturabhängige Steuerung des Druckhalteventiles gemäß Anspruch 3 berücksichtigt gleichfalls den besonders niedrigen Dampfdruck des Kältemittels bei niedrigen Temperaturen mit dadurch bedingter relativ geringer Kältemittel-Fördermenge des Kompressors. Um dabei zum Heizen ein rasches Einsetzen der Heizwirkung des als Heiz-Kondensators wirksamen Kühl-Verdampfers zu gewährleisten, ermöglicht der mit der Temperatur des ihm zuströmenden Kältemittels verringerte Druckwert des Druckhalteventiles ein rasches Entleeren des Heiz-Verdampfers von kaltem flüssigen Kältemittel. Gleichzeitig begrenzt der nach dem Druckhalteventil durch die Entspannung anfallende dampfförmige Teil des Kältemittels den Druckabfall auf der Kompressor-Saugseite und gewährleistet eine ausreichend hohe Kältemittel-Dichte und -fördermenge des Kompressors. Die temperaturbezogenen Druckwerte gemäß Anspruch 4 ergeben eine besonders vorteilhafte Heizfunktion. Durch die Zeitschaltvorrichtung gemäß Anspruch 5 werden Funktions-Störungen am Ende der Heizfunktion durch sofortiges Umschalten des Kreislaufes auf Kühlen und somit mögliches Eindringen flüssigen Kältemittels vom Heiz-Kondensator bzw. Kühl-Verdampfer in die Saugseite des Kompressors ausgeschlossen, weil sich bis zum Umschalten durch Abkühlen des Kältemittels dessen Druck verringert und ein Rückströmen des Kältemittels beim späteren Umschalten weitgehend unterbleibt. Die Steuerung der Umschaltvorrichtung gemäß Anspruch 6 vermeidet den zusätzlichen Bauaufwand einer Zeitschaltvorrichtung und geht davon aus, daß ein Heizen und Kühlen kurz hintereinander wegen der klimatischen Gegebenheiten nicht zu erwarten ist.

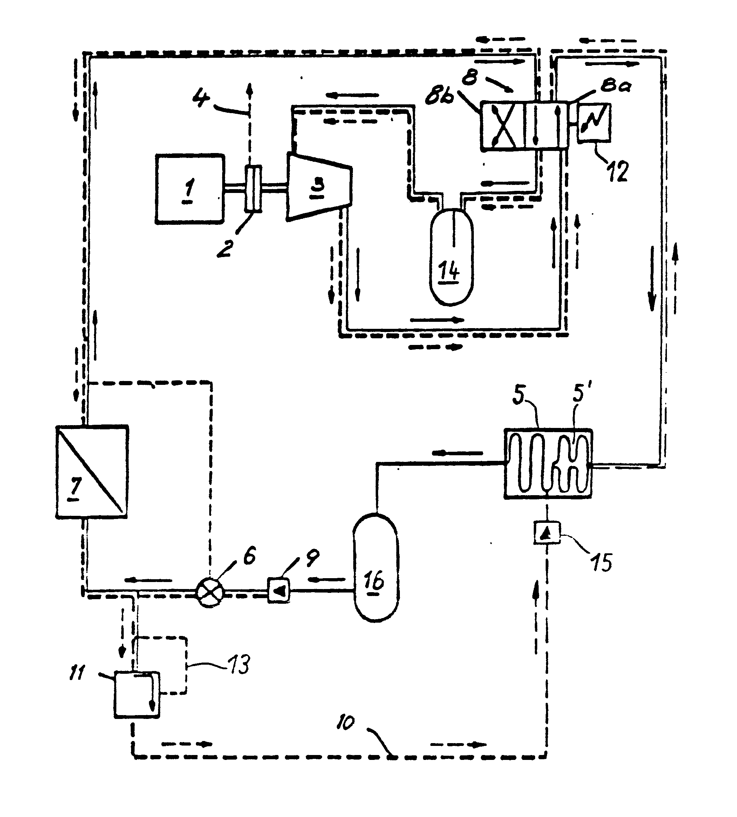

In der Zeichnung ist ein Ausführungsbeispiel der Erfindung dargestellt. Sie zeigt ein Prinzipschema des Kreislaufes einer Klimaanlage für Kraftfahrzeuge, die alternativ zum Kühlen und Heizen genutzt werden kann.

Ein Motor 1 eines Kraftfahrzeuges treibt über eine Kupplung 2 einen Kompressor 3 an. Eine Ansteuerung 4 gestattet ein bedarfsweises Lösen oder Schließen der Kupplung 2. Zum Kühlen eines Fahrzeuginnenraumes (durchzogene Strömungspfeile) gelangt das im Kompressor 3 verdichtete Kältemittel in den Kondensator 5, der in einem eingangsseitigen 30 bis 50 %-igen Teilbereich 5' zweiflutig ausgebildet ist, und von dort über das Expansionsventil 6 zum Verdampfer 7 und schließlich wiederum auf die Saugseite des Kompressors 3. Die im Verdampfen 7 für das Verdampfen des Kältemittels erforderliche Verdampfungswärme wird über die Lamellen des Verdampfers dem Luftstrom entzogen, der den Verdampfer durchströmt und auf diese Weise abgekühlt in den Fahrzeuginnenraum gelangt.

Dem Kompressor 3 ist ein Vierwegeventil 8 nachgeschaltet, dessen Arbeitsleitungsanschlüsse mit dem Kondensator 5 und dem Verdampfer 7 in Verbindung stehen. Der Rückflußleitungsanschluß des Vierwegeventils 8 ist mit der Saugseite des Kompressors 5 verbunden. Zwischen dem Vierwegeventil 8 und dem Expansionsventil 6 ist ein zum Expansionsventil 6 hin öffnendes Rückschlagventil 9 angeordnet. Weiterhin enthält der Kreislauf eine das Expansionsventil 6 umgehende Leitung 10, die ein Druckhalteventil 11 aufweist.

Das Vierwegeventil 8 hat zwei Schaltstellungen, nämlich die Schaltstellung 8a für Kühlbetrieb und die Schaltstellung 8b für Heizbetrieb, und eine elektrische Umschaltvorrichtung 12, die eine Zeitschaltvorrichtung mit Verzögerungsschaltzeit beim Umschalten von Heizen auf Kühlen oder eine Ruheschaltstellung für das Heizen aufweist. Bei dem Druckhalteventil 11 handelt es sich um ein Druckbegrenzungsventil, das den Kompressordruck und damit auch den Druck im Verdampfer 7 im Heizbetrieb bei über +5°C Kältemittel-Temperatur auf 15 bis 25 bar hält und bei Erreichen dieses Drucks öffnet. Eine Ansteuerung 13 für das Druckhalteventil 11 bewirkt bei niedrigerer Kältemittel-Temperatur einen niedrigeren Öffnungsdruck, der von 15 bar bei +5°C auf 8 bar bei -20°C absinkt.

Im Heizbetrieb (gestrichelte Pfeile) wird ein Teil der durch das Verdichten des Kältemittels erzeugten Kompressionswärme und der aus der Umgebungsluft im als Heiz-Verdampfer wirkenden Kühl-Kondensator 5 durch Wärmepumpen-Funktion aufgenommenen Umgebungswärme im als Heiz-Kondensator wirkenden Kühl-Verdampfer 7 an die in den oder als Umluft im Fahrzeuginnenraum geförderte bzw. umgewälzte Luft abgegeben und so der Innenraum bei noch kaltem Motor schnell aufgewärmt und eine rasche Scheibenentfrostung erreicht. Bei diesen Bedingungen bleibt der Kompressor 3 und damit der Heizbetrieb der Klimaanlage sinnvoll solange in Betrieb, bis die Temperatur des Motorkühlwassers einen ausreichend hohen Wert erreicht hat, um den Fahrgastraum über das übliche Heizgerät allein zu beheizen.

Zwischen dem Vierwegeventil 8 und der Saugseite des Kompressors 3 ist ein Abscheidebehälter 14 angeordnet. Der Abscheidebehälter 14 schützt den Kompressor 3 beim Umschaltvorgang vor Flüssigkeitsschlägen und dient ferner dazu, das eventuell auftretende flüssige Kältemittel nach dem Druckhalteventil 11 abzuscheiden.

In der Umgehungsleitung 10 ist ferner ein weiteres beim Heizen zum Kühl-Kondensator bzw. Heiz-Verdampfer 5 hin öffnendes Rückschlagventil 15 vorgesehen, während zwischen dem Kondensator und dem ersten Rückschlagventil 9 noch ein Vorratsbehälter 16 eingeschaltet ist. Die Rückschlagventile 9 und 15 sichern jeweils das Beaufschlagen des Expansionsventiles 6 oder des Rückhalteventiles 11, die je nach Einsatzart der Klimaanlage zum Kühlen bzw. Heizen in Funktion treten. Die Anlage ermöglicht eine Heizleistung von etwa 5 bis 7 KW schon bei relativ niedrigen Motor- und Kompressor-Drehzahlen. Sie ist sowohl für Kurzzeitbetrieb bis zur Ablösung durch die mit Motorwärme betriebene Heizanlage vor allem zum Einsatz in gemäßigten bis kaltem Klimazonen als auch für Dauerbetrieb anstelle einer vorgenannten Heizanlage vor allem zum Einsatz in weitgehend heißen Klimazonen geeignet.

**Patentansprüche**

1. Klimaanlage für Kraftfahrzeuge, insbesondere für Personenkraftwagen, mit einem über eine Umschaltvorrichtung von Kühlen auf Heizen des Fahrzeuginnenraumes umschaltbaren Kreislauf, in dem zum Kühlen das Kältemittel nacheinander einen Kompressor (3), einen Kondensator (5), Expansionsventil (6) und einen Verdampfer (7) durchströmt und in dem in Gegenstromrichtung zum Heizen das Expansionsventil mittels einer ein Druckhalteventil (11) enthaltenden Umgehungs-Leitung (10) umgangen ist, dadurch gekennzeichnet, daß der Kondensator (5), der beim Heizen als Heiz-Verdampfer (5) dient, in einem Teilbereich (5') von der Eintrittsseite aus beim Kühlen oder zur Austrittsseite hin beim Heizen mehrflutig ausgebildet ist und daß die Umgehungs-Leitung (10) in Strömungsrichtung beim Heizen vor der Verzweigung oder im Bereich der Verzweigung auf den mehrflutigen Bereich (5') des Heiz-Verdampfers (5) einmündet.

2. Klimaanlage nach Anspruch 1, dadurch gekennzeichnet, daß der mehrflutige Teilbereich (5') 30 bis 50 % des Kältemittel-Volumens des Kondensators (5) beträgt.

3. Klimaanlage nach Anspruch 1 oder 2, dadurch gekennzeichnet, daß das Druckhalteventil (11) einen veränderlichen Druck steuert, der von der Temperatur des zuströmenden Kältemittels abhängt und der im Bereich um und unter 0°C wesentlich niedriger liegt als der gleichbleibend hoch gesteuerte Druck bei höherer Temperatur.

4. Klimaanlage nach Anspruch 3, dadurch gekennzeichnet, daß der Druck von 15 bar beginnend bei +5°C bis 8 bar bei -20°C absinkt.

5. Klimaanlage nach einem der Ansprüche 1 bis 4, gekennzeichnet durch eine Zeitschaltvorrichtung (12), die den Kreislauf bei Beendigung des Heizens mit Zeitverzögerung auf Kühlen umschaltet.

6. Klimaanlage nach einem der Ansprüche 1 bis 4, dadurch gekennzeichnet, daß die Umschaltvorrichtung (8 und 12) eine Ruhe-Schaltstellung in ihrer Einstellung zum Heizen aufweist.

**Claims**

1. An air-conditioning installation for motor vehicles, especially for passenger cars, having a circuit which can be switched over by a switch-over device from cooling to heating of the vehicle interior, in which, for cooling, the coolant flows successively through a compressor (3), a condenser (5), an expansion valve (6) and an evaporator (7), and in which, for heating, the expansion valve is by-passed in the countercurrent direction by means of a by-pass conduit (10) containing a pressure-retaining valve (11),
characterised in that
the condenser (5), which serves as a heat evaporator (5) in heating, is of multi-flow construction in a partial zone (5') from the entry side in cooling or to the exit side in heating, and
that the by-pass conduit (10) opens in the direction of flow in heating before the branch or in the region of the branch to the multi-flow region (5') of the heating evaporator (5).

2. An air-conditioning installation according to Claim 1, characterised in that
the multi-flow partial zone (5') amounts to 30 to 50 % of the coolant volume of the condenser (5).

3. An air-conditioning installation according to Claim 1 or 2,
characterised in that the pressure-retaining valve (11) controls a variable pressure which depends upon the temperature of the inflowing coolant and, in the range around and below 0 degrees C., lies substantially lower than the pressure, constantly controlled to high, at higher temperature.

4. An air-conditioning installation according to Claim 3,
characterised in that
the pressure, starting from 15 bars at +5 degrees C. , drops to 8 bars at -20 degrees C.

5. An air-conditioning installation according to any one of Claims 1 to 4,
characterised by a time-switch device (12) which, on termination of heating, switches over the circuit with a time delay to cooling.

6. An air-conditioning installation according to any one of Claims 1 to 4,
characteried in that
the change-over device (8 and 12) has a rest position in its setting for heating.


**Revendications**

1. Installation de climatisation pour véhicules automobiles notamment pour voitures de transport de personnes, avec un circuit susceptible d'être commuté du refroidissement au chauffage de l'espace interne du véhicule, par l'intermédiaire d'un dispositif de commutation, installation dans laquelle pour le refroidissement, le fluide de refroidissement circule successivement dans un compresseur (3), dans un condensateur (5) dans une soupape d'expansion (6) et dans un évaporateur (7), et dans laquelle, dans le sens de circulation opposé pour le chauffage, la soupape d'expansion est shuntée au moyen d'une canalisation de dérivation (10) comprenant une soupape (11) de maintien de la pression, installation caractérisée en ce que
- le condenseur (5) qui lors du chauffage joue le rôle d'évaporateur de chauffage (5) est davantage rempli de liquide dans une zone partielle (5') en partant du côté entrée lors du refroidissement ou bien en allant vers le côté sortie lors du chauffage,
- la canalisation de dérivation (10) débouche dans le sens de l'écoulement lors du chauffage en avant de la dérivation ou bien au voisinage de la dérivation sur la zone (5') de l'évaporateur de chauffage (5) où il y a davantage de liquide.

2. Installation de climatisation selon la revendication 1, caractérisée en ce que la zone partielle (5') où il y a davantage de liquide atteint 30 à 50 % du volume du fluide de refroidissement du condenseur (5).

3. Installation de climatisation selon la revendication 1 ou 2, caractérisée en ce que la soupape (11) de maintien de la pression commande une pression variable, qui dépend de la température du fluide de refroidissement arrivant à cette soupape et qui, au voisinage de 0°C ou bien au-dessous de 0°C, se situe notablement plus bas que la pression commandée constamment élevée pour une température plus haute.

4. Installation de climatisation selon la revendication 3, caractérisée en ce que la pression partant de 15 bars pour +5°C s'abaisse jusqu'à 8 bars pour -20°C.

5. Installation de climatisation selon une des revendications 1 à 4, caractérisée en ce qu'elle comporte un dispositif de commutation temporisé (12) qui commute avec retard le circuit sur refroidissement lorsque cesse le chauffage.

6. Installation de climatisation selon une des revendications 1 à 4, caractérisée en ce que le dispositif de commutation (8 et 12) comporte une position de commutation de repos dans sa mise en position pour le chauffage.